# EUROPÄISCHE PATENTSCHRIFT

(11) **EP 0 642 873 B1**
(45) Veröffentlichungstag und Bekanntmachung des Hinweises auf die Patenterteilung: **07.01.1998**
(21) Anmeldenummer: 94110154.5
(22) Anmeldetag: 29.06.1994
(51) Int. Cl.: B23K 9/29

(54) **Vorrichtung zum Schutzgasschweissen**
Shield gas welding apparatus
Appareillage de soudage avec gaz de protection

(30) Priorität: 14.09.1993 DE 9313893 U
(43) Veröffentlichungstag der Anmeldung: 15.03.1995
(73) Patentinhaber: FRIEDRICH, Bernd, D-87494 Rückholz (DE)
(72) Erfinder: FRIEDRICH, Bernd, D-87494 Rückholz (DE)
(74) Vertreter: Strehl Schübel-Hopf Groening & Partner

(56) Entgegenhaltungen:
- WO-A-93/13934
- US-A- 4 788 401
- US-A- 4 916 270

## Beschreibung

Die Erfindung betrifft eine Vorrichtung zum Schutzgasschweißen mit einem einen Schweißdraht führenden metallischen Düsenkörper, einer diesen in einem Abstand umgebenden Hülse und einem an dem vorderen offenen Ende der Hülse angebrachten oder mit der Hülse einstückig ausgebildeten Schutzkörper, der eine Stirnwand aufweist.

Im Stand der Technik sind Schutzgasschweißbrenner mit einem metallischen Düsenkörper und einer diesen in einem Abstand umgebenden Hülse bekannt. Bei dieser Art von Schutzgasschweißbrennern können die beim Schweißen entstehenden Schweiß- und Metallspritzer in den Innenraum der Hülse gelangen, wobei sie dort mit dem Düsenkörper verschweißen und einmal den Drahtvorschub stören und sogar unterbrechen und zum anderen zu einer Brückenbildung führen können, so daß eine Strombrücke zwischen dem stromführenden Düsenkörper und der nichtstromführenden Hülse entsteht. Berührt man dann mit der Hülse das Werkstück, so sind Beschädigungen unvermeidbar.

Durch die PCT/WO 93/13934 ist des weiteren ein Schutzgasschweißbrenner bekannt, der einen Schutzkörper mit einer Stirnwand im Bereich des vorderen Endes der Hülse aufweist. Die Stirnwand des Schutzkörpers dient dazu, die Metall- und Schweißspritzer abzufangen und nicht in den Innenraum der Hülse gelangen zu lassen. Die Stirnwand weist ein koaxiales Zentralloch, sowie im Abstand davon mehrere umfangsverteilte Gasaustrittsöffnungen auf. Das Zentralloch ist mit der Düsenachse des Düsenkörpers axial ausgefluchtet, so daß der Schweißdraht durch das Zentralloch austritt und dieses abschließt. Die Ausbildung der Gasaustrittsöffnungen ist fertigungstechnisch aufwendig. Außerdem besteht die Gefahr, daß diese Gasaustrittsöffnungen durch beim Schweißvorgang entstehende Metall- und Schweißspritzer verstopft oder zumindest in ihrem Umfang verkleinert werden, so daß das Gas weniger Austrittsmöglichkeiten hat. Des weiteren sind die Gasaustrittsöffnungen schwer zu reinigen.

Aufgabe der vorliegenden Erfindung ist es, eine Vorrichtung zum Schutzgasschweißen der durch die PCT/WO 93/13934 bekannten Art so auszubilden, daß die im Stand der Technik bekannten Nachteile vermieden werden.

Diese Aufgabe wird erfindungsgemäß gelöst durch eine Vorrichtung zum Schutzgasschweißen mit den Merkmalen des Anspruches 1.

Dadurch, daß die Stirnwand des Schutzkörpers nur eine einzige Öffnung mit einem Durchmesser, der den gleichzeitigen Austritt des Schweißdrahtes und eines Schutzgases ermöglicht, aufweist, läßt sich der Schutzkörper einfacher, schneller und kostengünstiger fertigen. Hierzu war aber ein Vorteil zu überwinden, denn man war im Stand der Technik bisher immer davon ausgegangen, daß am vorderen offenen Ende der Hülse eine möglichst große Öffnung vorhanden sein muß, damit das dort austretende Schutzgas einen möglichst großen Bereich des zu schweißenden Werkstückes erfaßt, um die zu schweißende Stelle wirksam vor Oxidation durch Luftsauerstoff zu schützen. Auch die durch die PCT/WO 93 13934 bekannten Gasaustrittsöffnungen im Abstand von der zentralen Öffnung dienten diesem Zweck.

Es wurde jedoch im Rahmen der vorliegenden Erfindung in überraschender Weise erkannt, daß es völlig ausreichend ist, das Schutzgas aus einer einzigen Öffnung in der Stirnwand des Schutzkörpers austreten zu lassen.

Dadurch, daß das Gas die erfindungsgemäße Öffnung in der Stirnwand des Schutzkörpers passiert, deren Durchmesser bedingt durch die Stirnwand kleiner ist als der der Hülse, hat der Gasstrom nach dem Austritt aus dieser Öffnung das Bestreben, sich zu verbreitern. Am Werkstück selbst steht damit ein viel größerer Bereich mit Schutzgasatmosphäre zur Verfügung, als am Austrittsort des Gases aus der Öffnung, was den wirksamen Schutz des Werkstückes vor Oxidation gewährleistet. Gleichzeitig hat die Tatsache, daß der Gasstrom sich nach dem Austritt aus der erfindungsgemäßen Öffnung verbreitert, den weiteren Vorteil, daß dadurch die Bewegungsrichtung der Metall- und Schweißspritzer beeinflußt wird. Diese werden bevorzugt in einem solchen Winkel verspritzt, daß sie an der Stirnfläche des Schweißbrenners vorbeigeführt werden, was die Verschmutzung der Stirnwand des Schutzkörpers verringert.

In einer ersten Ausführungsform der Erfindung ist der Schutzkörper nichtmetallisch. Dabei kann der Schutzkörper aus einem Bornitrid-Mischkeramikmaterial bestehen, das zur Verringerung der Oberflächenhaftung Oxid- und/oder Carbidanteile aufweist.

Der Durchmesser der Öffnung, die die Stirnwand aufweist, kann kleiner oder gleich dem Durchmesser des Düsenkörpers sein. Dadurch wird das Eindringen von Schweißspritzern in das Innere der Hülse noch wirksamer vermieden. Überraschenderweise hat sich nämlich gezeigt, daß das zuvor geschilderte Bestreben des Gasstromes, sich zu verbreitern, wenn er die Stirnwand des Schutzkörpers passiert hat, auch dann noch zu einem wirksamen Schutz des Werkstückes vor Oxidation führt, wenn der Durchmesser der Öffnung in der Stirnwand kleiner oder gleich dem Durchmesser des Düsenkörpers ist.

Der Durchmesser der Öffnung kann aber auch größer als der Düsenkörper sein, ohne den erfindungsgemäßen Erfolg zu beeinträchtigen.

In einer zweiten Ausführungsform kann der Schutzkörper jedoch auch metallisch und einstückig mit der Hülse ausgebildet sein. Dabei kann vorgesehen sein, daß sich an die Innenwandung der Hülse eine Wasserkühlung anschließt. Diese Wasserkühlung dient dann der Abführung der beim Schutzgasschweißen entstehenden Wärme. Vorzugsweise ist die Wasserkühlung als Rückflußkühlung ausgebildet, um das erwärmte Wasser stets abführen und durch neues kaltes Wasser ersetzen zu können.

Anhand der Zeichnung wird die Erfindung beispielsweise näher erläutert.

Es zeigen:
- Fig. 1: eine unvollständig dargestellte und teilweise geschnittene Ansicht einer ersten Ausführungsform eines erfindungsgemäß ausgebildeten Schweißbrenners,
- Fig. 2: eine Stirnansicht des Schweißbrenners gemäß Fig. 1.
- Fig. 3: eine unvollständig dargestellte und teilweise geschnittene Ansicht einer zweiten Ausführungsform des erfindungsgemäßen Schweißbrenners.

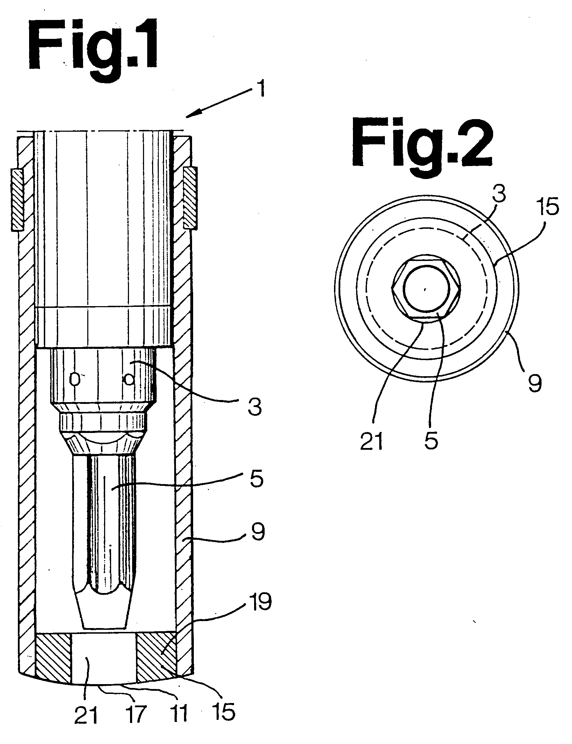

Der in den Fig. 1 bis 3 gezeigte Schweißbrenner 1 weist einen Brennerkopf 3 mit Düsenkörper 5 auf, durch die der nicht gezeigte Schweißdraht zur Schweißstelle geführt wird. Der Vorschub befindet sich am Schweißgerät und erfolgt durch ein Schlauchpaket, in dem auch die elektrische Energie, der Draht und das Schutzgas zum Brenner geführt werden. Der Brennerkopf 3 ist von einer Hülse 9, vorzugsweise aus Kupfer, umgeben, so daß das Schutzgas in einen Ringkanal zwischen Düsenkörper 5 und Hülse 9 austritt.

Um das Eindringen von Schweißspritzern in das Innere der Hülse 9 zu vermeiden, weist die Hülse 9 in einer ersten Ausführungsform, die in den Fig. 1 und 2 dargestellt ist, an ihrem vorderen offenen Ende 11 einen Schutzkörper 15 auf, der aus einer Stirnwand 17 und einem in das Innere der Hülse 9 ragenden Bund 19 besteht. Der Schutzkörper 15 kann auf verschiedene Weise mit der Hülse 9 verbunden sein. So kann der Bund 19 ein Außengewinde aufweisen, mit dem er in ein entsprechendes Innengewinde der Hülse 9 eingeschraubt ist. Er kann aber auch in das offene Ende der Hülse eingepreßt sein. Eine weitere Möglichkeit besteht darin, daß der Schutzkörper 15 und die Hülse 9 einstückig ausgebildet sind. In der Stirnwand 17 befindet sich eine Öffnung 21, deren Durchmesser bevorzugt demjenigen der Kontaktdüse im Düsenkörper 5 entspricht. Grundsätzlich kann jedoch der Durchmesser der Öffnung 21 größer, kleiner oder gleich dem Durchmesser des Düsenkörpers 5 sein. Die Öffnung 21 ist in der Stirnwand 17 so positioniert, daß der Schweißdraht aus dem Düsenkörper 5 austreten und durch die Öffnung 21 nach außen gelangen kann. Der Schutzkörper 15 besteht vorzugsweise aus einem Bornitrid-Mischkeramikmaterial. Durch zusätzliche Anteile an Boriden, wie beispielsweise Titanborid und/oder Oxiden, wie beispielsweise Zirkonoxid und/oder Carbiden, wie beispielsweise Siliziumcarbid, lassen sich die Eigenschaften des Schutzkörpers 15 weiter verbessern, mit dem Erfolg, daß Schweiß- und Metallspritzer, die von der Schweißstelle zurückgeschleudert werden, von der Stirnwand 17 des Schutzkörpers 15 im wesentlichen abprallen. Die dennoch anhaftenden Metallreste lassen sich durch Absteifen entfernen.

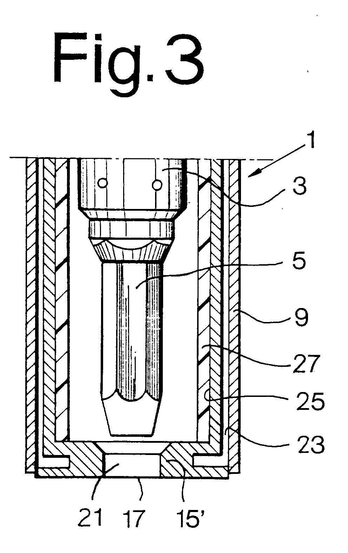

Eine zweite Ausführungsform des erfindungsgemäßen Schneidbrenners 1 ist in Fig. 3 dargestellt und unterscheidet sich von der ersten Ausführungsform dadurch, daß der Schutzkörper 15 metallisch und vorzugsweise einstückig mit der Hülse 9 ausgebildet ist. Der metallische Schutzkörper 15, kann aber auch als separates Teil mit der Hülse 9 verbunden sein, wie dies bereits bei dem Schutzkörper 15 gemäß der ersten Ausführungsform beschrieben worden ist. Da beim Schutzgasschweißen eine große Wärme erzeugt wird, ist bei dieser Ausführungsform des erfindungsgemäßen Schweißbrenners 1 vorgesehen, daß sich an die Innenwandung der Hülse 9 eine Wasserkühlung 23 anschließt. Die in Richtung auf den Düsenkörper 5 weisende Wandung 25 der Wasserkühlung 23 weist zusätzlich eine Isolierung 27 auf. Des weiteren ist die Wasserkühlung 23 in Form einer Rückflußkühlung ausgebildet. Dies ist dadurch möglich, daß das Wasser mittels einer in der Zeichnung nicht dargestellten Trennwand zwangsgeführt wird. Die Trennwand ist vorzugsweise als Frästeil gefertigt und aus Kupfer oder Messing gebildet. Dadurch kann das erwärmte Wasser abgeführt und stets durch kaltes Wasser ersetzt werden. Die Zuführung und Abführung des Wassers geschieht in an sich bekannter Weise über das Schlauchpaket.

In einer weiteren, in der Zeichnung nicht dargestellten Ausführungsform ist vorgesehen, daß auch der Düsenkörper 5 von einer Isolierung umgeben ist. Es kann auch nur der Düsenkörper 5 eine Isolierung, beispielsweise in Form einer Isolierhülse aufweisen.

## Patentansprüche

1. Vorrichtung zum Schutzgasschweißen mit einem einen Schweißdraht führenden metallischen Düsenkörper (5), einer diesen in einem Abstand umgebenden Hülse (9) und einem an dem offenen Ende (11) der Hülse (9) angebrachten oder mit der Hülse (9) einstückig ausgebildeten Schutzkörper (15, 15'), der eine Stirnwand (17) aufweist, dadurch gekennzeichnet, daß die Stirnwand (17) eine einzige Öffnung (21) mit einem Durchmesser aufweist, der den gleichzeitigen Austritt des Schweißdrahtes und eines Schutzgases ermöglicht.

2. Vorrichtung nach Anspruch 1, dadurch gekennzeichnet, daß der Schutzkörper (15) nichtmetallisch ist.

3. Vorrichtung nach Anspruch 2, dadurch gekennzeichnet, daß der Schutzkörper (15) aus eine Bornitrid-Mischkeramikmaterial besteht und daß das Material Oxid- und/oder Carbidanteile aufweist.

4. Vorrichtung nach Anspruch 1, dadurch gekennzeichnet, daß der Schutzkörper (15') metallisch und vorzugsweise einstückig mit der Hülse (9) ausgebildet ist.

5. Vorrichtung nach Anspruch 4, dadurch gekennzeichnet, daß sich an die Innenwandung der Hülse (9) eine Wasserkühlung (23) anschließt.

6. Vorrichtung nach Anspruch 5, dadurch gekennzeichnet, daß die Wasserkühlung (23) als Rückflußkühlung ausgebildet ist.

7. Vorrichtung nach einem der Ansprüche 1 bis 6, dadurch gekennzeichnet, daß der Durchmesser der Öffnung (21) kleiner oder gleich dem Durchmesser des Düsenkörpers (5) ist.

8. Vorrichtung nach einem der Ansprüche 1 bis 6, dadurch gekennzeichnet, daß der Durchmesser der Öffnung (21) größer als der Durchmesser des Düsenkörpers (5) ist.

## Claims

1. A shield gas welding apparatus including a metallic nozzle body (5) guiding a welding wire, a sleeve (9) surrounding the body in spaced relationship, and a protective body (15, 15') mounted at the open end (11) of the sleeve (9) or formed integrally therewith and having an end wall (17), characterised in that the end wall (17) has a single opening (21) of a diameter that permits the welding wire and a shield gas to pass simultaneously therethrough.

2. The apparatus of claim 1, characterised in that the protective body (15) is non-metallic.

3. The apparatus of claim 2, characterised in that the protective body (15) is made of a boron nitride composite ceramic material containing oxide and/or carbide.

4. The apparatus of claim 1, characterised in that the protective body (15') is metallic and preferably formed integrally with the sleeve (9).

5. The apparatus of claim 4, characterised in that a water cooling (23) is located next to the inner wall of the sleeve (9).

6. The apparatus of claim 5, characterised in that the water cooling (23) is in the form of a reflux cooling.

7. The apparatus of any one of claims 1 to 6, characterised in that the diameter of the opening (21) is smaller than or equal to the diameter of the nozzle body (5).

8. The apparatus of any one of claims 1 to 6, characterised in that the diameter of the opening (21) is larger than the diameter of the nozzle body (5).

## Revendications

1. Dispositif de soudage sous gaz protecteur comprenant un corps métallique formant bec (5) guidant une baguette d'apport, un manchon (9) entourant à distance ledit corps formant bec (9), et un corps de protection (15, 15') qui est disposé à l'extrémité ouverte (11) du manchon (9) ou est conçu d'un seul tenant avec le manchon (9) et qui comporte une paroi frontale (17), caractérisé en ce que la paroi frontale (17) comporte un orifice unique (21) d'un diamètre permettant la sortie simultanée de la baguette d'apport et d'un gaz protecteur.

2. Dispositif selon la revendication 1, caractérisé en ce que le corps de protection (15) est non métallique.

3. Dispositif selon la revendication 2, caractérisé en ce que le corps de protection (15) est réalisé en matériau céramique mixte à base de nitrure de bore, et en ce que ce matériau comporte des proportions d'oxyde et/ou de carbure.

4. Dispositif selon la revendication 1, caractérisé en ce que le corps de protection (15') est métallique et est réalisé de préférence d'un seul tenant avec le manchon (9).

5. Dispositif selon la revendication 4, caractérisé en ce qu'un moyen de refroidissement par eau (23) est adjacent à la paroi intérieure du manchon (9).

6. Dispositif selon la revendication 5, caractérisé en ce que le moyen de refroidissement par eau (23) est conçu sous la forme d'un moyen de refroidissement à reflux.

7. Dispositif selon l'une des revendications 1 à 6, caractérisé en ce que le diamètre de l'orifice (21) est inférieur ou égal au diamètre du corps formant bec (5).

8. Dispositif selon l'une des revendications 1 à 6, caractérisé en ce que le diamètre de l'orifice (21) est supérieur au diamètre du corps formant bec (5).
